(19) Europäisches Patentamt
European Patent Office
Office européen des brevets

(11) **EP 2 872 883 B1**

(12) **FASCICULE DE BREVET EUROPEEN**

(45) Date de publication et mention
de la délivrance du brevet:
**10.03.2021 Bulletin 2021/10**

(21) Numéro de dépôt: **13744674.6**

(22) Date de dépôt: **02.07.2013**

(51) Int Cl.:
***G01N 29/04*** *(2006.01)*     ***G01N 29/07*** *(2006.01)*
***G01N 29/22*** *(2006.01)*

(86) Numéro de dépôt international:
**PCT/FR2013/051556**

(87) Numéro de publication internationale:
**WO 2014/009632 (16.01.2014 Gazette 2014/03)**

(54) **PROCEDE DE CARACTERISATION D'UN OBJET COMPRENANT AU MOINS LOCALEMENT UN PLAN DE SYMETRIE**

VERFAHREN ZUM CHARAKTERISIEREN EINES OBJEKTS MIT, ZUMINDEST ÖRTLICH, EINER SYMMETRIEEBENE

METHOD FOR CHARACTERISING AN OBJECT COMPRISING, AT LEAST LOCALLY, A PLANE OF SYMMETRY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.07.2012 FR 1256629**

(43) Date de publication de la demande:
**20.05.2015 Bulletin 2015/21**

(73) Titulaire: **Safran Aircraft Engines
75015 Paris (FR)**

(72) Inventeur: **CHATELLIER, Jean-Yves François
Roger
F-77550 Moissy-cramayel Cedex (FR)**

(74) Mandataire: **Cabinet Beau de Loménie
158, rue de l'Université
75340 Paris Cedex 07 (FR)**

(56) Documents cités:
**DE-A1- 19 957 905**     **US-A- 4 890 496**
**US-A- 5 005 417**     **US-A- 5 243 862**
**US-A1- 2009 019 937**

- **MCCARTNEY R N ET AL: "TRANSVERSE PATH
OF ULTRASOUND WAVES IN THICK-WALLED
CYLINDERS", MEDICAL AND BIOLOGICAL
ENGINEERING AND COMPUTING, SPRINGER,
HEILDELBERG, DE, vol. 33, no. 4, 1 juillet 1995
(1995-07-01), pages 551-557, XP000516477, ISSN:
0140-0118**

## Description

Domaine technique et art antérieur

L'invention s'inscrit dans le domaine des méthodes d'étude et de caractérisation des pièces pour l'industrie, notamment pour déterminer les propriétés mécaniques volumiques et les caractéristiques de surface.

L'invention s'applique notamment à des éléments de petites tailles pour lesquelles il n'est pas possible de mener des essais mécaniques de traction. C'est par exemple le cas des billes de roulements à billes, de diamètre de l'ordre du centimètre. L'invention est particulièrement destinée aux pièces présentant une surface, qui dans un plan de section est courbe.

On ne connait pas actuellement de solution permettant de déterminer l'isotropie interne d'un tel petit élément, ni ses caractéristiques mécaniques comme le module d'Young ou le coefficient de Poisson. Or ces pièces doivent être bien connues pour assurer la fiabilité des roulements.

On connait les techniques de caractérisation par mesure d'onde ultrasonore, notamment d'onde réfléchie, mais aussi d'onde réfractée ou d'onde de surface. Ainsi les documents FR2806162 et EP1691193 présentent des systèmes de détection de défaut par un traducteur mesurant les ondes réfléchies, la surface de matériau irradiée par les ultrasons étant plane.

Le document EP1767898 divulgue quant à lui d'utiliser l'onde de Rayleigh, qui est une onde de surface, produite à la surface d'une pièce exposée à une onde ultrasonore incidente, pour mesurer l'épaisseur d'une couche superficielle, comme une couche de nitruration.

Et le document FR2930034 enseigne d'utiliser l'onde réfractée longitudinale pour mesurer des contraintes résiduelles dans un matériau ayant subi un traitement. On utilise à ces différentes fins des traducteurs ultrasonores pour l'inspection par contact, ou des traducteurs ultrasonores pour l'inspection de pièces immergées. Les méthodes utilisant ces traducteurs ont l'avantage d'être non destructives. L'article scientifique « Transverse path of ultrasound waves in thick-walled cylinders » de R. N. McCartney et al, publié le 1 juillet 1995 la revue « Medical and Biological Engineering & Computing » (pages 551-557, XP000516477, ISSN : 0140-0118), décrit des ultrasons transmis par un cylindre creux modélisant un os.

On déplace des traducteurs ultrasonores émetteur et détecteur positionnés de manière coaxiale tout en effectuant l'observation d'ultrasons transmis par le cylindre, chaque observation étant effectuée sur un axe perpendiculaire au plan de symétrie du cylindre et faisant suite à une émission d'ultrasons rencontrant le cylindre avec une incidence différente de la normale; on observe un maximum d'amplitude des signaux mesurés et le temps de parcours de l'onde ultrasonore est utilisé pour caractériser le cylindre.

Définition de l'invention - avantages apportés par celle-ci

L'invention proposée, telle que définie dans la revendication 1, est un procédé de caractérisation d'un objet comprenant au moins localement un plan de symétrie, le procédé comprenant au moins une observation d'ultrasons transmis par ledit objet, chaque observation étant effectuée sur un axe perpendiculaire au plan de symétrie, chaque observation faisant suite à une émission d'ultrasons rencontrant l'objet selon ledit axe avec une incidence différente de la normale, les ultrasons rencontrant l'objet en sorte de suivre un trajet symétrique par rapport au plan de symétrie. L'analyse du temps de parcours de l'onde ultrasonore permet de caractériser l'objet, qu'il soit petit ou grand, ce qui constitue un avantage important par rapport aux techniques antérieures, qui ne permettaient pas de caractériser un petit élément.

Le fait que les ultrasons rencontrent l'objet avec une incidence différente de la normale permet d'utiliser la surface de l'objet comme un outil de conversion de mode (ondes de volume ou de surface), ce qui apporte des informations supplémentaires par rapport à l'observation d'une onde transmise ou réfléchie. L'utilisation d'un trajet symétrique par rapport à un plan de symétrie permet d'utiliser des traducteurs d'émission et de réception en vis-à-vis, faciles à mettre en place et à régler.

On déplace des traducteurs ultrasonores émetteur et récepteur positionnés de manière coaxiale tout en effectuant l'émission d'ultrasons et l'observation d'ultrasons transmis, et on observe au moins deux ondes parmi les ondes longitudinales, transversales, et de Rayleigh créées par les ultrasons émis. Les propriétés déterminées par un tel procédé de caractérisation peuvent inclure le module d'Young ou le Coefficient de Poisson de l'objet.

Il peut être avantageux d'observer les trois ondes parmi les ondes longitudinales, transversales, et de Rayleigh et de valider le procédé en utilisant la formule de Viktorov.

Dans un autre mode de réalisation, l'objet ayant un deuxième plan de symétrie perpendiculaire au premier plan de symétrie, on déplace de part et d'autre du deuxième plan de symétrie des traducteurs ultrasonores émetteur et récepteur positionnés de manière coaxiale tout en effectuant l'émission d'ultrasons et l'observation d'ultrasons transmis et on observe de part et d'autre du deuxième plan de symétrie deux ondes longitudinales, ou deux ondes transversales. Les propriétés de l'objet déterminées par un tel procédé de caractérisation peuvent inclure un caractère isotrope ou anisotrope au moins dans un plan.

Dans un autre mode de réalisation, on observe au moins une onde de Rayleigh créée à la surface dudit objet par les ultrasons le rencontrant. La mesure du temps de parcours permet de détecter la présence d'une couche ou d'une zone résultant d'un traitement de surface sur l'objet.

L'invention est appliquée tout particulièrement quand l'objet a une surface qui comprend au moins un arc d'ellipse, ou un arc de cercle. L'objet est en particulier une bille ou un rouleau de roulement, mais d'autres applications sont possibles.

Brève description des figures

La figure 1 présente une étape préliminaire d'un mode de réalisation d'un procédé selon l'invention.
La figure 2 présente une étape ultérieure d'un mode de réalisation d'un procédé selon l'invention.
La figure 3 présente les éléments importants d'un mode de réalisation de l'invention.
Les figures 4 à 9 présentent des visualisations des éléments importants présentés en figure 3, pour deux utilisations du procédé selon l'invention.
La figure 10 présente les éléments importants d'un autre mode de réalisation de l'invention.

Description de modes de réalisation

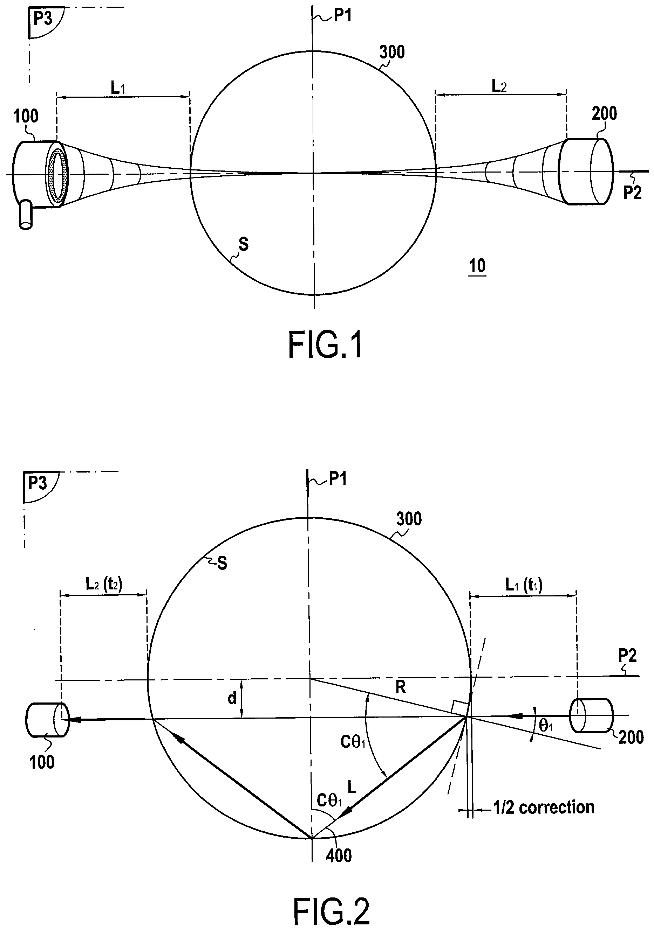

En **figure 1**, on a représenté une étape de réglage d'un appareil de caractérisation, pour la caractérisation d'une bille de roulement. Cet appareil est basé sur l'utilisation de traducteurs ultrasonores à immersion.

L'appareil comprend un premier traducteur ultrasonore 100 et un deuxième traducteur ultrasonore 200, dans un volume d'eau. Ils sont positionnés de manière coaxiale, en vis-à-vis l'un de l'autre, de part et d'autre d'une bille de roulement constituant une sphère 300. Il s'agit ici de traducteurs focalisés 101,6 mm (4") de type Harisonic I7-1012-R, de fréquence 10 MHz, de diamètre 19,05 mm (0,75") et dont la tâche focale en point focal est estimée à 0.808 mm. D'autres traducteurs pourraient être utilisés.

Au cours de l'étape de réglage, les traducteurs sont actionnés en mode émission et réception. Ils sont réglés normalement au point de la sphère. Ainsi, en mode transmission, les deux traducteurs 100 et 200 sont parfaitement coaxiaux. Les faisceaux d'ultrasons générés dans l'eau sont coaxiaux.

L'ensemble constitué de la sphère et des deux traducteurs admet un plan de symétrie P1. La section de la sphère perpendiculaire au plan P1 et dans le plan de l'axe des traducteurs a une surface S qui est un cercle.

On mesure le temps de parcours correspondant à un aller-retour de l'onde de la surface du traducteur focalisé au point de la sphère associé au maximum d'amplitude de l'onde reçue. On obtient la hauteur de la colonne d'eau L1 entre le traducteur 100 et la surface de la sphère 300 en rapportant le temps t1 lu sur l'écran de l'oscilloscope à la vitesse de l'onde dans l'eau, à savoir $V_{eau}$ = 1486,5 m/s. On obtient la hauteur de la colonne d'eau L2 entre le traducteur 200 et la surface de la sphère 300 en procédant de même.

En **figure 2**, on a présenté une étape élémentaire d'un procédé selon l'invention. Les deux traducteurs 100 et 200 font l'objet d'une même translation, selon une direction perpendiculaire à leur axe commun, en partant de la configuration représentée en figure 1, ou d'une autre configuration.

On effectue ensuite des mesures des signaux reçus par l'un des traducteurs, fonctionnant en mode réception (ici le traducteur 100), l'autre (le traducteur 200) fonctionnant en mode émission.

Pour une translation donnée des traducteurs, d'une distance d par rapport à la position initiale, on connait l'allongement du parcours des ultrasons dans l'eau, qui s'exprime de la manière suivante :

$$correction = 2.R(1 - \cos\theta_1)$$

Les signaux mesurés sont enregistrés et on constate, en observant tout d'abord deux maxima, la présence de deux ondes transmises, apparaissant à deux distances d de l'axe initial des traducteurs.

La trajectoire d'une onde est représentée en figure 2, et porte la référence 400. L'onde parvient, depuis le traducteur émetteur 200, à la surface de la sphère 300 avec un angle θ1 par rapport à la normale. Elle est déviée à l'interface eau/sphère par le phénomène de réfraction et progresse dans la sphère avec un angle Cθ1 par rapport à la normale. Elle rencontre la surface de la sphère après un parcours L, et, pour la fraction qui nous intéresse, est réfléchie par cette surface. Elle effectue ensuite un deuxième parcours dans la sphère, puis atteint une nouvelle fois sa surface, qui la réfracte. L'onde progresse ensuite dans l'eau.

La particularité des distances d pour lesquelles des maxima sont observés est que la réflexion a lieu à égale distance des deux traducteurs, et que l'onde, après la deuxième réfraction, se dirige vers le traducteur récepteur 100.

Qui plus est, en exploitant le fait que la réflexion se fait avec un angle 2 Cθ1, ce qui est dû au caractère symétrique de la bille, on a tan Cθ1 = (R - correction/2) / (R-d).

Les lois de Snell-Descartes permettent alors d'obtenir l'angle Cθ1 qui s'exprime

$$C\theta_1 = \tan^{-1}\frac{R - d}{R\cos\theta_1}$$

La distance L parcourue par l'onde entre l'une des réfractions (en entrée ou en sortie) et la réflexion est

$$L = \frac{R - d}{\sin C\theta_1}$$

Le temps de parcours de l'onde à l'intérieur de la sphère 300 peut être déduit en tenant compte de la correction liée à l'allongement des colonnes d'eau L1 et L2. On en déduit la vitesse de propagation de l'onde dans la sphère.

Ce calcul est effectué pour l'onde longitudinale, qui apparaît la première au cours du déplacement des traducteurs à partir de leurs positions initiales, puis pour l'onde transversale, qui apparaît ultérieurement avec une amplitude supérieure. En poursuivant le déplacement des traducteurs, on observe une troisième onde, qui est une onde de surface, appelée l'onde de Rayleigh. Cette onde n'apparaît que pour un angle d'incidence particulier. Une fois créée, elle rayonne lors de sa propagation le long de la surface, avec un angle égal à l'angle de l'onde incidente qui l'a créée, à savoir ici l'angle θ1.

En notant Φ le diamètre de la sphère, la distance parcourue par l'onde de Rayleigh qui est captée par le traducteur récepteur est la longueur d'un secteur de cercle s'exprimant comme suit

$$L = \frac{2\pi\emptyset}{4}\left(\frac{90 - \theta_1}{90}\right).$$

Il est aisé, connaissant cette distance ainsi que la longueur corrigée des colonnes d'eau, de déterminer la vitesse de propagation de l'onde de Rayleigh.

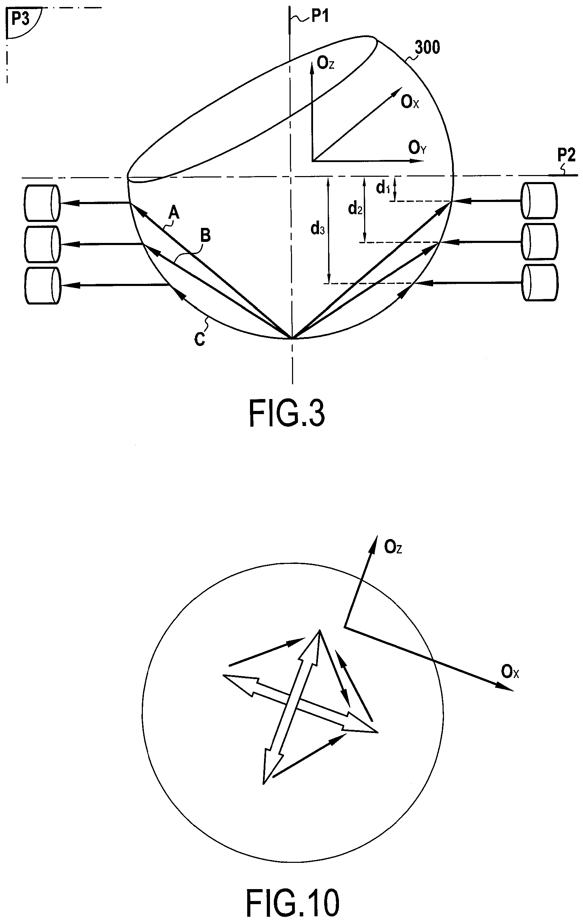

En **figure 3**, on a représenté les trois ondes détectées successivement lors du déplacement des traducteurs : l'onde longitudinale A, l'onde transversale B et l'onde de Rayleigh C.

A partir des vitesses des ondes, on déduit le coefficient de Poisson et le module d'Young du matériau de la sphère 300.

On a appliqué la méthode à une bille de roulement en acier inoxydable de rayon 9,523 mm. Les résultats obtenus sont les suivants.

Onde longitudinale

d = 1,729 mm
θ1 = 10,46°
Temps de parcours dans l'eau = 132,64 μs
Cθ1 = 39,77°
L=12,183 mm
Temps de parcours mesuré = 136,73 μs
Vitesse dans la sphère = 5 957,4 m/s
Onde transversale
d = 3,539 mm
θ1 = 21,82°
Temps de parcours dans l'eau = 133,35 μs
Cθ1 = 34,09°
L=21,351 mm
Temps de parcours mesuré = 139,94 μs
Vitesse dans la sphère = 3 238,8 m/s
Onde de Rayleigh
d = 4,677 mm

θ1 = 29,415°
Temps de parcours dans l'eau = 131,106 μs
L=20,139 mm
Temps de parcours mesuré = 137,80 μs
Vitesse à la surface de la sphère = 3 008,9 m/s

La méthode est validée en comparant la vitesse déduite pour l'onde de Rayleigh par mesure, à celle obtenue par la loi de Viktorov sur la base des vitesses des ondes longitudinales et transversales, suivant la formule

$$V_R = V_T\frac{0,718 - \frac{V_T^2}{V_L^2}}{0,75 - \frac{V_L^2}{V_L^2}}.$$

La vitesse de l'onde de Rayleigh obtenue par la loi de Viktorov est de 3 010,7 m/s, ce qui est très proche de la valeur obtenue par mesure.

Les valeurs d'au moins deux des ondes parmi l'onde transversale, l'onde longitudinale et l'onde de Rayleigh sont ensuite utilisées pour déduire le module d'Young et le coefficient de Poisson du matériau de la sphère, supposé homogène.

On obtient les valeurs suivantes
Module d'Young E = 211,7 GPa
Coefficient de Poisson = 0,290.

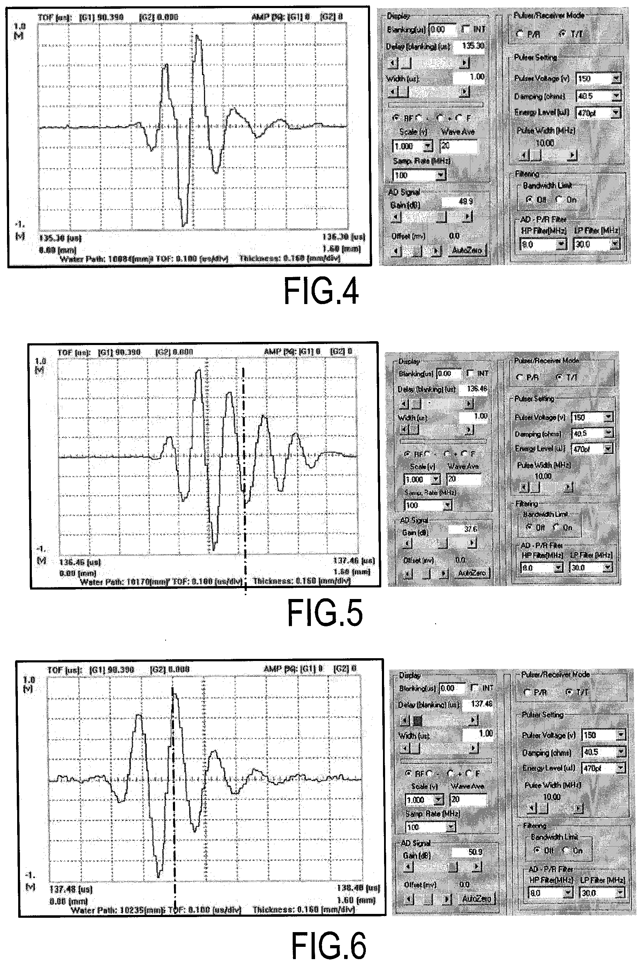

Les **figures 4 à 6** présentent les spectres observés par le traducteur récepteur 100. En figure 4, on observe un maximum d'amplitude pour d = 1,729 mm pour l'onde longitudinale. En figure 5, on observe un maximum d'amplitude à d = 3,539 mm pour l'onde transversale, et en figure 6, on observe un maximum d'amplitude à d = 4.677 pour l'onde de Rayleigh. On constate que c'est l'onde transversale qui est transmise avec la plus forte amplitude, alors que l'onde de Rayleigh est la plus faiblement transmise des trois ondes.

On a également appliqué la méthode à une bille de nitrure de silicium (Si3N4) de rayon 4,7615 mm. Les résultats obtenus sont les suivants

Onde longitudinale

V = 11 827,3 m/s

Onde transversale

V = 6 377,9 m/s

Onde de Rayleigh

V = 5 916,6 m/s
La loi de Viktorov donne 5933,4 m/s, ce qui valide une nouvelle fois la méthode. Les caractéristiques mécaniques de la bille obtenues sur cette base sont
Module d'Young E = 333,6 GPa
Coefficient de Poisson = 0,295.

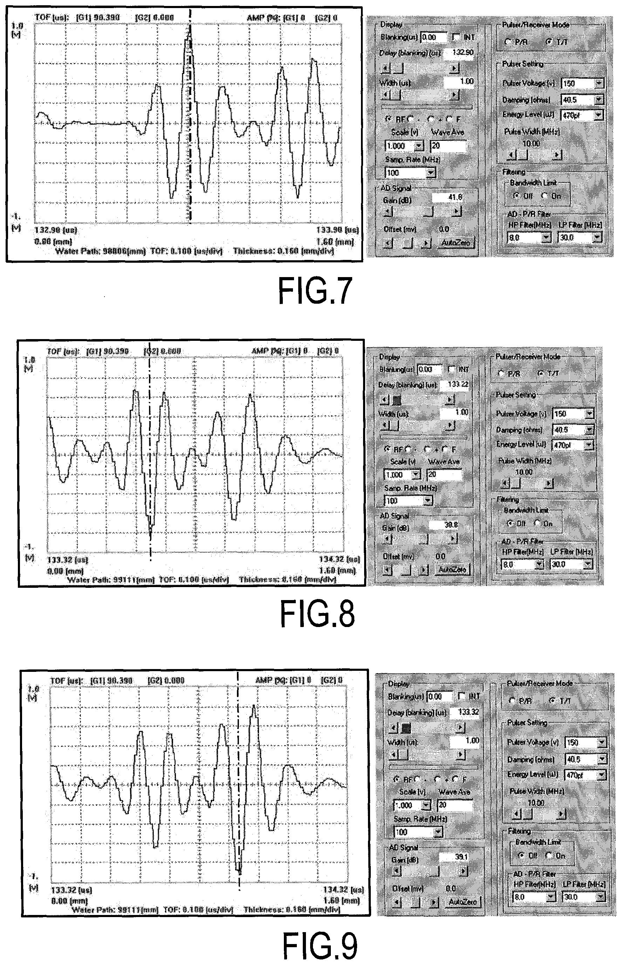

Les **figures 7 à 9** présentent les spectres observés par le traducteur récepteur 100. L'axe des ordonnées représente la tension mesurée, et l'axe des abscisses le temps. En figure 7, on observe un maximum d'amplitude pour d = 0,359 mm pour l'onde longitudinale. En figure 8, on observe un maximum d'amplitude à d = 0,753 mm pour l'onde transversale, et en figure 9, on observe un maximum d'amplitude à d = 1,007 pour l'onde de Rayleigh.

En **figure 10**, on a représenté un deuxième mode de réalisation de l'invention. On déplace les traducteurs, toujours parallèlement l'un à l'autre, cette fois-ci dans deux directions, dans un sens puis dans l'autre, à partir de l'alignement initial. Ainsi, on scrute la matière de la bille, dans quatre directions. On utilise notamment le fait que la sphère dispose d'un deuxième plan de symétrie, noté P2 (voir les figures 1 à 3), ainsi que d'un troisième plan de symétrie P3 (non représenté), à savoir le plan des figures. Ces deux plans comprennent l'axe d'alignement initial des traducteurs.

Si les temps de parcours pour les déplacements des traducteurs pour lesquelles une onde donnée, transversale ou longitudinale, apparaît, sont identiques lors des quatre mesures, on peut conclure que la matière de la bille est isotrope.

Dans le cas de la bille d'acier inoxydable évoquée plus haut, on obtient les valeurs suivantes pour l'onde transversale : Oz = - 3,540 mm (t=139,94 $\mu$s), Oz = + 3,540 mm (t=139,96 $\mu$s), Ox = - 3,537 mm (t=139,96 $\mu$s) et Ox = + 3 541 mm (t= 139,94 $\mu$s).

Au vu de la proximité des valeurs, on peut conclure que la bille est effectivement isotrope.

Dans le cas de la bille de nitrure de silicium, on obtient les valeurs suivantes, toujours pour l'onde transversale : Oz = - 1,010 mm (t= 133,94 $\mu$s), Oz = + 1,125 mm (t=134,03 $\mu$s), Ox = - 1,001 mm (t=133,99 $\mu$s) et Ox = + 1,200 mm (t=133,99 $\mu$s).

Là aussi, au vu de la proximité des valeurs, on peut conclure que la bille est effectivement isotrope.

Le caractère isotrope ou anisotrope de la bille pourrait être étudié en comparant les valeurs obtenues pour les ondes longitudinales. On peut également se contenter de mesurer deux valeurs le long d'un axe, par exemple Oz dans la direction positive et Oz dans la direction négative, ce qui donne une information d'isotropie dans un plan.

Selon un procédé ne représentant pas un mode de réalisation de l'invention, on observe l'onde de Rayleigh, référencée C en figure 3, avec un agencement comme celui de la figure 3. La mesure de la position de l'axe d'observation et/ou la détermination du temps de parcours de l'onde sur la surface permet de déterminer si la sphère 300 a été traitée en surface, par un traitement de surface tel que la nitruration, qui modifie la vitesse de propagation de l'onde de Rayleigh, du fait de la présence en surface d'une couche ou d'une zone de nature chimique ou de propriétés physiques différentes de la matière initiale. En variante de ce procédé, on observe une seule ou plusieurs des trois ondes représentées en figure 3, pour un exemplaire donné de l'objet 300, et on compare les valeurs de distance d et/ou de temps de parcours, à celles obtenues pour un exemplaire témoin de l'objet 300, de manière à vérifier que l'exemplaire étudié est conforme à l'exemplaire témoin.

L'invention s'applique aussi à un cylindre de roulement, dont la section est par exemple circulaire. Elle s'applique aussi aux billes ou cylindres de roulement dont la section est elliptique, et, de manière générale, aux objets de préférence convexes qui ont un plan de symétrie et par exemple une surface courbe dans un plan perpendiculaire au plan de symétrie. On déplace l'ensemble constitué des deux traducteurs parallèlement au plan de symétrie, de manière à diriger les ultrasons sur la surface à différents angles d'incidence. Quand l'onde transmise est réfléchie dans le plan de symétrie, elle est captée par le traducteur récepteur, et le temps de parcours et/ou la distance d permettent de caractériser l'objet. Le plan de symétrie peut être un plan de symétrie local, et la symétrie peut ne concerner que certaines des parties de l'objet à caractériser.

L'invention n'est pas limitée aux modes de réalisation qui ont été présentés, mais s'étend à toutes les variantes dans le cadre de la portée des revendications.

## Revendications

1. Procédé de caractérisation d'un objet (300) comprenant au moins localement un plan de symétrie (P1), dans lequel on déplace des traducteurs ultrasonores émetteur et récepteur (100, 200) positionnés de manière coaxiale tout en effectuant l'émission d'ultrasons par le traducteur ultrasonore émetteur et l'observation, par le traducteur ultrasonore récepteur, d'ultrasons transmis (A, B, C) par ledit objet (300), chaque observation étant effectuée sur un axe perpendiculaire au plan de symétrie (P1), chaque observation faisant suite à une émission d'ultrasons générés selon, respectivement ledit axe et rencontrant l'objet (300) selon ledit axe avec une incidence ($\theta$1) différente de la normale, les ultrasons rencontrant l'objet (300) en sorte de suivre un trajet symétrique par rapport au plan de symétrie (P1), au moins deux ondes étant observées parmi les ondes longitudinales, transversales, et de Rayleigh créées par les ultrasons émis, en observant deux maxima d'amplitude des signaux mesurés, le temps de parcours associé auxdits maxima de chaque onde ultrasonore étant analysé pour caractériser l'objet.

2. Procédé selon la revendication 1, dans lequel on observe les trois ondes (A, B, C) parmi les ondes longitudinales, transversales, et de Rayleigh et on valide le procédé en utilisant la formule de Viktorov.

**3.** Procédé selon la revendication 1 ou 2, dans lequel, l'objet ayant un deuxième plan de symétrie (P2, P3) perpendiculaire au premier plan de symétrie (P1), on déplace de part et d'autre du deuxième plan de symétrie (P2, P3) des traducteurs ultrasonores émetteur et récepteur (100, 200) positionnés de manière coaxiale tout en effectuant l'émission d'ultrasons et l'observation d'ultrasons transmis et on observe de part et d'autre du deuxième plan de symétrie (P2, P3) deux ondes longitudinales, ou deux ondes transversales.

**4.** Procédé selon l'une des revendications 1 à 3, dans lequel on observe au moins une onde de Rayleigh (C) créée à la surface dudit objet par les ultrasons le rencontrant.

**5.** Procédé selon l'une des revendications 1 à 4, dans lequel on utilise des traducteurs ultrasonores à immersion (100, 200).

**6.** Procédé selon l'une des revendications 1 à 5, dans lequel l'objet a une surface (S) qui comprend au moins un arc d'ellipse.

**7.** Procédé selon la revendication 6, dans lequel la surface (S) comprend au moins un arc de cercle.

**8.** Procédé selon l'une des revendications 1 à 7, dans lequel l'objet (300) est une bille ou un rouleau de roulement.

**Patentansprüche**

**1.** Verfahren zur Charakterisierung eines Objekts (300), das zumindest lokal eine Symmetrieebene (P1) umfasst,
wobei Ultraschall-Sende- und Empfangswandler (100, 200) verschoben werden, die auf koaxiale Weise positioniert sind, so dass die Aussendung von Ultraschall von dem Ultraschall-Sendewandler und die Beobachtung des von dem Objekt (300) übertragenen Ultraschalls (A, B, C) von dem Ultraschall-Empfangswandler durchgeführt wird,
wobei jede Beobachtung an einer Achse senkrecht auf die Symmetrieebene (P1) durchgeführt wird und jede Beobachtung auf eine Aussendung von Ultraschall folgt, der jeweils gemäß der Achse erzeugt wird und auf das Objekt (300) gemäß der Achse mit einem Einfallswinkel (θ1) trifft, der sich von der Normalen unterscheidet, wobei der Ultraschall auf solche Weise auf das Objekt (300) trifft, dass er einer in Bezug auf die Symmetrieebene (P1) symmetrischen Bahn folgt,
wobei zumindest zwei Wellen unter den Longitudinal-, Transversal- und Rayleigh-Wellen, die durch den ausgesendeten Ultraschall erzeugt werden, beobachtet werden, indem zwei Amplitudenmaxima von gemessenen Signalen beobachtet werden, wobei die Laufzeit, die den Maxima jeder Ultraschallwelle zugeordnet ist, analysiert wird, um das Objekt zu charakterisieren.

**2.** Verfahren nach Anspruch 1, wobei die drei Wellen (A, B, C) unter den Longitudinal-, Transversal- und Rayleigh-Wellen beobachtet werden und das Verfahren unter Verwendung der Viktorov-Formel validiert wird.

**3.** Verfahren nach Anspruch 1 oder 2, wobei das Objekt eine zweite Symmetrieebene (P2, P3) senkrecht auf die erste Symmetrieebene (P1) aufweist und auf beiden Seiten der zweiten Symmetrieebene (P2, P3) Ultraschall-Sende- und Empfangswandler (100, 200) verschoben werden, die auf koaxiale Weise positioniert sind, so dass die Aussendung von Ultraschall durchgeführt wird und auf beiden Seiten der zweiten Symmetrieebene (P2, P3) zwei Longitudinal-Wellen oder zwei Transversal-Wellen beobachtet werden.

**4.** Verfahren nach einem der Ansprüche 1 bis 3, wobei zumindest eine Rayleigh-Welle (C) beobachtet wird, die an der Oberfläche des Objekts durch den auftreffenden Ultraschall erzeugt wird.

**5.** Verfahren nach einem der Ansprüche 1 bis 4, wobei Ultraschall-Tauchwandler (100, 200) verwendet werden.

**6.** Verfahren nach einem der Ansprüche 1 bis 5, wobei das Objekt eine Oberfläche (S) aufweist, die zumindest einen Ellipsenbogen umfasst.

**7.** Verfahren nach Anspruch 6, wobei die Oberfläche (S) zumindest einen Kreisbogen umfasst.

**8.** Verfahren nach einem der Ansprüche 1 bis 7, wobei das Objekt (300) eine Kugel oder eine Rollwalze ist.

**Claims**

**1.** A method of characterizing an object (300) that includes, at least locally, a plane of symmetry (P1), wherein emitting and receiving ultrasound transducers (100, 200) positioned on a common axis are shifted, while emitting ultrasound by the emitting ultrasound transducer and observing, by the receiving ultrasound transducer, transmitted ultrasound (A, B, C) by said object (300), each observation being performed on an axis perpendicular to the plane of symmetry (P1), each observation resulting from an emission of ultrasound generated along a respective one of said axes and meeting the object (300) along said axis at an incidence ($\theta_1$) other than normal, the ultrasound meeting the object (300) in such a manner as to follow a path that is symmetrical relative to the plane of symmetry (P1),

at least two waves being observed among the longitudinal, transverse, and Rayleigh waves created by the emitted ultrasound, by observing two amplitude maximums of the measured signals,

the travel time associated to said maximums of each ultrasound wave being analyzed in order to characterize the object.

2. A method according to claim 1, wherein observations are made of all three waves (A, B, C) among the longitudinal, transverse, and Rayleigh waves, and the method is validated by using Viktorov's formula.

3. A method according to claim 1 or 2, wherein the object having a second plane of symmetry (P2, P3) perpendicular to the first plane of symmetry (P1), the emitting and receiving ultrasound transducers (100, 200) positioned on a common axis are shifted on either side of the second plane of symmetry (P2, P3) while emitting ultrasound and observing transmitted ultrasound, and two longitudinal waves or two transverse waves are observed on either side of the second plane of symmetry (P2, P3).

4. A method according to any one of claims 1 to 3, wherein observations are made of at least one Rayleigh wave (C) created at the surface of said object by the ultrasound meeting it.

5. A method according to any one of claims 1 to 4, wherein immersion ultrasound transducers (100, 200) are used.

6. A method according to any one of claims 1 to 5, wherein the object has a surface (S) that includes at least one arc of an ellipse.

7. A method according to claim 6, wherein the surface (S) includes at least one arc of a circle.

8. A method according to any one of claims 1 to 7, wherein the object (300) is a bearing ball or roller.

FIG.1

FIG.2

FIG.3

FIG.10

FIG.4

FIG.5

FIG.6

EP 2 872 883 B1

FIG.7

FIG.8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2806162
- EP 1691193 A
- EP 1767898 A
- FR 2930034

**Littérature non-brevet citée dans la description**

- **R. N. MCCARTNEY et al.** *Transverse path of ultrasound waves in thick-walled cylinders,* 01 Juillet 1995
- *Medical and Biological Engineering & Computing,* 551-557